# EUROPÄISCHE PATENTSCHRIFT

(11) **EP 3 385 558 B1**
(45) Veröffentlichungstag und Bekanntmachung des Hinweises auf die Patenterteilung: **04.12.2019**
(21) Anmeldenummer: 17165549.1
(22) Anmeldetag: 07.04.2017
(51) Int. Cl.: F16D 3/78, F16D 3/79

(54) **LAMELLENKUPPLUNG**
MULTIPLE DISC CLUTCH
EMBRAYAGE À DISQUE

(43) Veröffentlichungstag der Anmeldung: 10.10.2018
(73) Patentinhaber: Flender GmbH, 46395 Bocholt (DE)
(72) Erfinder: Kleinewegen, Stefan, 46395 Bocholt (DE); Cichetzki, Michael, 48691 Vreden (DE); Farwick, Andreas, 48683 Ahaus (DE)
(74) Vertreter: Maier, Daniel Oliver

(56) Entgegenhaltungen:
- EP-A2- 1 146 238
- DE-A1- 2 036 041
- DE-A1- 3 437 388
- US-A- 4 744 783

## Beschreibung

Die Erfindung betrifft eine Lamellenkupplung. Die Drehmomentübertragung bei gleichzeitigem Versatzausgleich zwischen den zu verbindenden Maschinen erfolgt bei einer Lamellenkupplung spielfrei, verdrehstarr und biegeelastisch. Der Versatzausgleich kann in axialer, winkliger und radialer Richtung erfolgen. Lamellenkupplungen, insbesondere drehstarre Ganzstahl-Lamellenkupplungen, sind in allen Anwendungen einsetzbar, wo eine Drehmomentübertragung bei gleichzeitiger Wellenverlagerung erforderlich ist. Drehstarre Ganzstahl-Lamellenkupplungen eignen sich unter anderem für den Antrieb von Pumpen, Lüftern, Kompressoren, Generator- und Turbinenantrieben sowie Papier- und Druckmaschinenantrieben. Ganzstahl-Lamellenkupplungen sind in explosionsfähigen Umgebungen und bei Tieftemperaturen einsetzbar.

DE3443485A1 (ATEC-Weiss KG) 05.06.1986 beschreibt eine Lamellenkupplung, deren beide jeweils einen Anschlussflansch aufweisende Kupplungshälften über einen Lamellenpaketkranz, der mittels umfangsmäßig verteilt angeordneten Spannbolzen wechselweise an den beiden Anschlussflanschen befestigt ist, drehstarr und axial- und winkelbeweglich miteinander verbunden sind.

Bei herkömmlichen Lamellenkupplungen, die an den Flanschverschraubungen einen kreisrunden Bund bzw. Ring aufweisen, ergibt sich das Problem, dass bei einer Verbiegung des Lamellenpaketkranzes, wie sie während des Betriebs der Lamellenkupplung ständig erfolgt, der Bund bzw. Ring immer an demselben Punkt die Decklamelle des Lamellenpaketkranzes belastet, nämlich am kürzesten Verbindungspunkt zweier benachbarter Anschraubpunkte der Flanschverschraubungen. Infolge der fortwährenden Belastung über lange Zeiträume ermüdet das Lamellenmaterial an diesem exponierten Punkt und wird dort anfällig für Verschleiß, z.B. Rost und Bruch.

Es ist eine Aufgabe der Erfindung, eine verbesserte Lamellenkupplung bereitzustellen.

Diese Aufgabe wird erfindungsgemäß durch eine Lamellenkupplung mit den in Anspruch 1 angegebenen Merkmalen gelöst. Die Erfindung betrifft eine Lamellenkupplung mit zwei Anschlussflanschen und einem zwischen den Anschlussflanschen angeordneten Zwischenstück. Zwischen jedem der Anschlussflansche und dem Zwischenstück ist jeweils ein Lamellenpaketkranz angeordnet. Der jeweilige Lamellenpaketkranz ist mittels Schraubelementen wechselweise mit dem jeweiligen Anschlussflansch und dem Zwischenstück verbunden. Dabei sind die Schraubelemente durch in dem Lamellenpaketkranz angeordnete durchgehende Befestigungsbohrungen geführt. Mindestens eine der Befestigungsbohrungen des Lamellenpaketkranzes weist eine von der Kreisform abweichende Kontur auf. In die Befestigungsbohrung ist ein Formschlusselement mit einer korrespondierenden Außenkontur eingesetzt. Mindestens ein dem Lamellenpaketkranz als Biegekante dienendes Bauteil liegt formschlüssig an der Außenkontur des Formschlusselements an.

Bei der erfindungsgemäßen Lamellenkupplung liegen Bauteile mit einer nicht kreisrunden Außenkontur, nämlich Bauteile mit einer Biegekante, an den Decklamellen des Lamellenpakets an. Erfindungsgemäß ist der bei herkömmlichen Lamellenkupplungen vorhandene exponierte Biegepunkt des Lamellenpakets, der durch Bauteile mit einer kreisrunden Außenkontur bedingt ist, in eine linienförmige Biegekante verlängert; somit ergibt sich eine signifikante Reduktion der Spannung im Biegebereich des Lamellenpakets. Zum Beispiel sind der Kragen bzw. der oder die Ringe der erfindungsgemäßen Lamellenkupplung nicht mehr kreisförmig, sondern ein Vieleck, so dass anstatt einer punktförmigen Berührung eine linienförmige Biegekante vorliegt. Durch die linienförmige Biegekante verteilt sich die Pressung über eine Strecke, und wirkt nicht mehr auf einen einzigen Punkt wie bisher. Folglich wird das für die Lamellenkupplung zulässige Drehmoment erhöht und der zulässige Wellenversatz vergrößert.

Um zu erreichen, dass die linienförmige Biegekante sich nicht verdreht, sondern immer an derselben Position bleibt, wo die Biegung des Lamellenpakets wirksam wird, muss man eine Verdrehsicherung des als Biegekante dienenden Bauteils sicherstellen: Durch die von der Kreisform abweichende Kontur der Befestigungsbohrungen des Lamellenpaketkranzes und die zu der Kontur der Befestigungsbohrungen korrespondierende Außenkontur des in die Befestigungsbohrung eingesetzten Formschlusselements ist das Formschlusselement verdrehsicher in dem Lamellenpaketkranz angeordnet. Das dem Lamellenpaketkranz als Biegekante dienende Bauteil liegt formschlüssig an der Außenkontur des Formschlusselements an, d.h. die Innenkontur des als Biegekante fungierenden Bauteils korrespondiert ihrerseits mit der Außenkontur des Formschlusselements. Dadurch ist auch das als Biegekante fungierende Bauteil verdrehsicher in Bezug auf den Lamellenpaketkranz angeordnet.

Zum Beispiel ist eine in die Befestigungsbohrung eingesetzte Buchse am Außenumfang nicht kreisrund, sondern weist eine Verdrehung unmöglich machende Kontur des Außenumfangs auf, z.B. eine gerade Kante, ein Vieleck, o.ä. Die Befestigungsbohrung im Lamellenpaket muss korrespondierend unrund bzw. vieleckig geformt sein. Am Innenumfang kann die Buchse weiterhin kreisrund sein, da dort ein Schraubbolzen eingesteckt wird. Beispiele für formschlüssige Konturen sind ein abgerundetes Vieleck, ein abgeflachter Kreis mit mindestens einer geraden Kante, eine geschlitzte Buchse in Kombination mit Ring und Lamellen mit einer vorstehenden Nase, sowie eine Profilverzahnung.

Zwischen der Buchse und dem Ring bzw. den Ringen kann die Verdrehsicherung außer durch einen Formschluss, wie beschrieben, auch kraftschlüssig oder auch stoffschlüssig erfolgen. Beispiele für eine stoffschlüssige Verdrehsicherung sind Verbindungen mittels einer Verklebung und einer Verschweißung. Ein Beispiel für eine kraftschlüssige Verdrehsicherung ist eine, vorzugsweise in warmem Zustand, mit Übermaß gefügte Verbindung.

Die Anschlussflansche sind vorzugsweise als ringförmige Flansche ausgebildet, deren Ringebene quer zur Rotationsachse der Lamellenkupplung verläuft. Die Anschlussflansche können an separate Nabenelemente, die zur Montage an Wellenenden oder - stumpfen vorgesehen sind, drehstarr montiert sein, z.B. mittels Schraubverbindungen. Die Anschlussflansche können auch einstückig mit solchen Nabenelementen ausgebildet sein.

Das zwischen den Anschlussflanschen angeordnete Zwischenstück weist ebenfalls Flansche auf, vorzugsweise als ringförmige Flansche ausgebildet, deren Ringebene quer zur Rotationsachse der Lamellenkupplung verläuft. Dabei können die beiden Flansche, einstückig oder als separate, montierbare Bauteile ausgebildet, an den Enden eines Hülsenstücks angeordnet sein, dessen Achse mit der Rotationsachse der Kupplung zusammenfällt. Es ist ebenfalls möglich, dass das Hülsenstück entfällt und die beiden Flansche in einem Flansch vereinigt sind, d.h. dass das Zwischenstück als eine Scheibe oder als ein Ring ausgebildet ist.

Als flexible Elemente in einer Lamellenkupplung dient der Lamellenpaketkranz, der auch als Lamellenpaket oder Lamellen bezeichnet wird. Die einzelnen, dünnen Lamellen können mittels einer Bundbuchse und eines Rings zu einem kompakten Lamellenpaket gefügt sein. Dabei umfasst die Bundbuchse eine durchgehende Buchse in Form eines Zylinderkörpers, an deren einem axialen Ende ein ringförmiger Bund, der auch als Kragen bezeichnet wird, angeordnet ist. Der Zylinderkörper der Buchse wird soweit durch eine durch das Lamellenpaket führende Befestigungsbohrung geschoben, dass der Bund an der Stirnseite des Lamellenpakets, d.h. an der Oberfläche der obersten Lamelle, anliegt. Auf der gegenüberliegenden Stirnseite des Lamellenpakets, d.h. an der Oberfläche der untersten Lamelle, wird der Ring über die Buchse geschoben, so dass der Ring an der Oberfläche der untersten Lamelle anliegt. Das Ende der Buchse wird mit dem Ring verbördelt. Dabei wird die Buchse an ihrem Ende nach außen verformt. Der Freiraum im Bereich der Fase des Ringes ermöglicht die Verformung. Durch die Verformung wird der Ring axial gegen die Decklamelle gedrückt. Durch eine Axialbohrung der Buchse wird ein Schraubelement gesteckt, z.B. ein Schraubbolzen mit einer Schraubmutter, welches das Lamellenpaket an einem der beiden Flansche befestigt, wobei das Lamellenpaket gegen den Bund und den Ring verspannt wird.

Die einzelnen, dünnen Lamellen des Lamellenpaketkranzes können auch mittels einer Buchse mit zwei Ringen zu einem kompakten Lamellenpaket gefügt sein. Dabei wird eine Buchse ohne Bund bzw. Kragen in das Lamellenpaket geschoben und an beiden Seiten wird jeweils ein Ring fest mit der Buchse verbördelt. Ein Schraubelement, z.B. ein Schraubbolzen mit einer Schraubmutter, wird durch eine Axialbohrung des Zylinderkörpers geführt und mit einer Schraubmutter an einem der beiden Flansche befestigt, wobei das Lamellenpaket gegen die Ringe verspannt wird.

Die einzelnen, dünnen Lamellen können auch mittels eines Schraubelements, auf welches zwei Ringe aufgesteckt werden, welche wiederum mit auf die Enden des Schraubelements aufgeschraubte Schraubmuttern an das Lamellenpaket gepresst werden, zu einem kompakten Lamellenpaket gefügt sein. Dabei kann das Schraubelement die Funktion einer Buchse übernehmen.

Vorteilhafte Ausgestaltungen und Weiterbildungen der Erfindung sind in den abhängigen Ansprüchen angegeben.

Gemäß einer bevorzugten Ausgestaltung der Erfindung ist das Formschlusselement als eine Buchse ausgeformt und trägt zwei jeweils an einer der beiden Stirnflächen des Lamellenpaketkranzes anliegende Ringe. Dabei dienen die Ringe dem Lamellenpaketkranz als Biegekanten und ihre Innenkontur korrespondiert zu der Außenkontur der Buchse. Ein Vorteil dieser Ausgestaltung ist, dass die Ringe durch eine Verbördelung der Buchse mit den Ringen axial gegen die Decklamellen des Lamellenpaketkranzes gedrückt und somit die einzelnen, dünnen Lamellen bereits zu einem kompakten Lamellenpaket gefügt werden können. Ein weiterer Vorteil dieser Ausgestaltung ist, dass die Buchse mit den beiden Ringen eine relativ kostengünstige Konstruktion bilden.

Gemäß einer bevorzugten Ausgestaltung der Erfindung ist das Formschlusselement als eine Buchse ausgeformt, welche in einem axialen Endbereich einen Bund aufweist. Der Bund kann einstückig mit der Buchse ausgebildet sein, d.h. die Kombination von Buchse und Bund bildet eine sogenannte Bundbuchse. Dabei liegt der Bund an einer Stirnfläche des Lamellenpaketkranzes an. Außerdem trägt die Buchse in dem anderen Endbereich einen Ring, der an der anderen Stirnfläche des Lamellenpaketkranzes anliegt. Dabei korrespondiert die Innenkontur des Rings zu der Außenkontur der Buchse; somit sitzt der Ring verdrehsicher in Bezug auf den Lamellenpaketkranz. Darüber hinaus dienen der Bund und der Ring dem Lamellenpaketkranz als Biegekanten. Ein Vorteil dieser Ausgestaltung ist, dass gegenüber der Variante "Buchse mit zwei Ringen" ein Bördelungsvorgang entfällt.

Gemäß einer bevorzugten Ausgestaltung der Erfindung ist das Formschlusselement als eine Buchse ausgeformt, welche eine runde Innenkontur aufweist. Ein Vorteil dieser Ausgestaltung ist, dass Buchsen mit einer runden Innenkontur in einer großen Vielfalt und daher kostengünstig auf dem Markt erhältlich sind. Ein weiterer Vorteil dieser Ausgestaltung ist, dass zylindrische Schraubbolzen einfach durch die kreisrunde Axialbohrung der Buchse gesteckt werden können.

Gemäß einer bevorzugten Ausgestaltung der Erfindung ist das Formschlusselement als eine Stiftschraube ausgeformt, welche zwei Ringe trägt. Unter einer Stiftschraube wird eine Schraube ohne Kopf verstanden, d.h. ein Bolzen mit einem nicht runden Umfang, welcher Gewinde an seinen beiden Enden aufweist. Die zwei Ringe liegen jeweils an einer der beiden Stirnflächen des Lamellenpaketkranzes an und dienen dem Lamellenpaketkranz als Biegekanten. Die Innenkontur der Ringe korrespondiert zu der Außenkontur der Stiftschraube; somit sitzen die Ringe verdrehsicher in Bezug auf den Lamellenpaketkranz. Ein Vorteil dieser Ausgestaltung ist, dass die Stiftschraube sowohl die Funktion des Formschlusselements als auch die Funktion eines Spann- und Verbindungselements zum Verspannen des Lamellenpaketkranzes und zum Verbinden des Lamellenpaketkranzes mit einem Flansch übernimmt.

Gemäß einer bevorzugten Ausgestaltung der Erfindung weisen die zwei Ringe bzw. der Bund und der Ring eine Außenkontur mit zwei im Wesentlichen geradlinigen Abschnitten auf. Die Tangenten der zwei im Wesentlichen geradlinigen Abschnitte stehen senkrecht auf den Verbindungslinien zu den Mittelpunkten der beiden unmittelbar benachbarten Befestigungsbohrungen. Ein Vorteil dieser Ausgestaltung ist, dass die im Wesentlichen geradlinigen Abschnitte eine optimal positionierte Biegekante für eine Biegebeaufschlagung des Lamellenpaketkranzes bilden. Durch die linienförmige Biegekante verteilt sich die Pressung des Lamellenpakets über eine Strecke und wirkt nicht auf einen einzigen Punkt. Folglich wird das für die Lamellenkupplung zulässige Drehmoment erhöht und der zulässige Wellenversatz vergrößert.

Die oben genannte Aufgabe der Erfindung wird außerdem durch ein Zwischenprodukt der Lamellenkupplung, nämlich eine Lamelle für eine Lamellenkupplung gelöst. Die erfindungsgemäße Lamelle weist zwei oder mehr durchgehende Befestigungsbohrungen auf. Dabei weist mindestens eine der Befestigungsbohrungen eine von der Kreisform abweichende Kontur auf. Solche Lamellen bilden die Grundlage einer erfindungsgemäßen Lamellenkupplung, da die Verdrehsicherung eines als Biegekante fungierenden Bauteils auf einer nicht kreisrund gestalteten Kontur der zugehörigen Befestigungsbohrung in den Lamellen basiert.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: eine Schrägansicht einer Bundbuchse mit einem Ring;
- Fig. 2: eine vergrößerte Ansicht des Bunds aus Fig. 1;
- Fig. 3: Schnitt III-III von Fig. 1 mit abgenommenen Ring;
- Fig. 4: Schnitt IV-IV von Fig. 1;
- Fig. 5: einen Längsschnitt durch eine Lamellenkupplung;
- Fig. 6: eine Ansicht eines Lamellenpaketkranzes;
- Fig. 7: Schnitt VII-VII von Fig. 6;
- Fig. 8: eine Kontur einer Befestigungsbohrung in Form eines abgerundeten Dreiecks;
- Fig. 9: Konturen einer Buchse und eines Rings für die Befestigungsbohrung in Fig. 8.
- Fig. 10: alternative Konturen einer Buchse und eines Rings für die Befestigungsbohrung in Fig. 8.
- Fig. 11: Konturen eines Rings für eine Befestigungsbohrung in Form eines abgerundeten Sechsecks;
- Fig. 12: eine Kontur einer Befestigungsbohrung in Form eines Kreises mit einer geraden Kante;
- Fig. 13: die Kontur einer Buchse für die Befestigungsbohrung in Fig. 12.
- Fig. 14: die Kontur eines Rings für die Buchse in Fig. 13.
- Fig. 15: eine Kontur einer Befestigungsbohrung in Form eines Kreises mit zwei geraden Kanten;
- Fig. 16: eine Kontur einer Befestigungsbohrung in Form eines Kreises mit einer vorstehenden Nase;
- Fig. 17: eine Kontur einer Bundbuchse für die Befestigungsbohrung in Fig. 16;
- Fig. 18: Schnitt XVIII-XVIII aus Fig. 17;
- Fig. 19: Schnitt XIX-XIX aus Fig. 17;
- Fig. 20: eine Kontur eines Rings für die Bundbuchse in Fig. 17;
- Fig. 21: Schnitt XXI-XXI aus Fig. 20; und
- Fig. 22: ein Detail eines Längsschnitts durch eine weitere Lamellenkupplung.

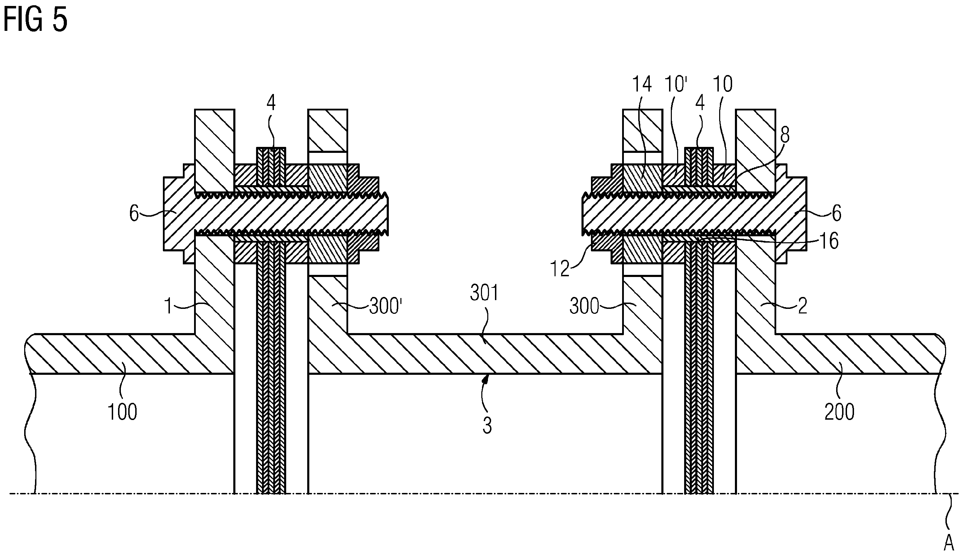

Fig. 5 zeigt im Schnitt eine radiale Hälfte einer in Bezug auf eine Längsachse A symmetrischen Lamellenkupplung, bei der zwei Anschlussflansche 1, 2 mittels eines zwischen den Anschlussflanschen 1, 2 angeordneten Zwischenstücks 3, welches durch eine Verbindungshülse 301 mit zwei endseitigen Flanschen 300, 300' gebildet ist, drehstarr miteinander verbunden sind. Die Anschlussflansche 1, 2 werden über hülsenförmige Naben 100, 200 an zu verbindenden Wellen (nicht gezeigt) montiert, z.B. mittels einer Spannverbindung.

Da die beiden Verbindungen zwischen jeweils einem der beiden Anschlussflansche 1, 2 und dem Zwischenstück 3 den gleichen Aufbau haben, wird im Folgenden nur die in Fig. 5 rechts dargestellte Verbindung in ihren Einzelheiten beschrieben. Gegenüber dem Anschlussflansch 2 ist ein ringförmiger Flansch 300 des Zwischenstücks 3 positioniert. Zwischen den beiden sich gegenüber liegenden ringförmigen Flanschen 2, 300 ist ein Lamellenpaketkranz 4 angeordnet, welcher aus einer Vielzahl von Stahllamellen gebildet ist, welche schichtweise aufeinander zu einem Paket angeordnet sind. Der Lamellenpaketkranz 4 weist umlaufend und äquidistant über seinen Umfang verteilt mehrere durchgehende Befestigungsbohrungen 16 auf. Der mit Abstand zwischen den Flanschen 2, 300 angeordnete Lamellenpaketkranz 4 ist mittels Schraubenbolzen 6 wechselweise an dem einen und anderen Flansch 2, 300 angeschlossen.

Dabei sind Buchsen 8 in die in dem Lamellenpaketkranz 4 angeordneten Befestigungsbohrungen 16 eingesetzt, wobei die Außenkontur der Buchsen 8 der Kontur der Befestigungsbohrungen 16 entspricht. An den beiden Stirnseiten des Lamellenpaketkranzes 4 wird jeweils ein Ring 10, 10' von der Buchse 8 getragen. Ein Schraubbolzen 6, welcher durch eine Bohrung in dem nabenseitigen Flansch 2 geführt ist und mit seinem Kopf an dem Flansch 2 anliegt, ist durch die Buchse 8 geschoben. An dem Gewindeende des Schraubbolzens 6 presst eine Schraubmutter 12 einen Abstandsring 14 gegen den zur Schraubmutter 12 hin gelegenen Ring 10'. Durch Anziehen der Schraubmutter 12 ist der Lamellenpaketkranz 4 fest zwischen den beiden Ringen 10, 10' eingespannt und mit dem nabenseitigen Flansch 2 verbunden.

An einer unmittelbar benachbarten Befestigungsbohrung des Lamellenpaketkranzes 4 ist der Lamellenpaketkranz 4 mit dem Flansch 300 des Zwischenstücks 3 verbunden, und so immer abwechselnd mit dem einen und dem anderen Flansch 2, 300.

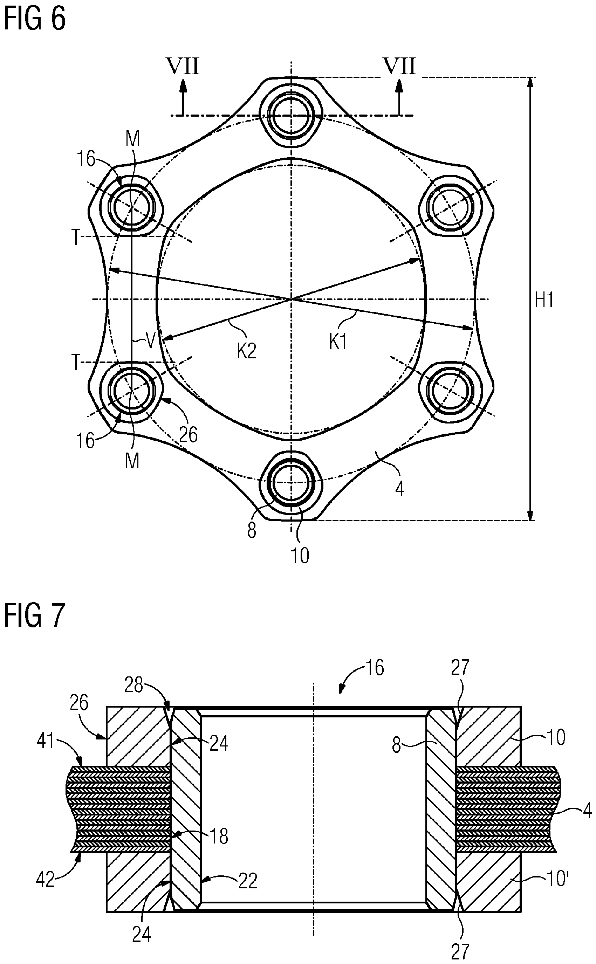

Fig. 6 zeigt eine Ansicht eines sechseckigen Lamellenpaketkranzes 4 mit sechs gleichmäßig äquidistant über den Umfang verteilten Befestigungsbohrungen 16. In die Innenkontur des Lamellenpaketkranzes 4 kann ein Kreis K2 gelegt werden; dabei weicht die Innenkontur in den Bereichen der Befestigungsbohrungen 16 insofern von der Form des Kreises K2 ab, dass sie dort einen größeren Durchmesser als der Kreis K2 aufweist. Die Mittelpunkte der Befestigungsbohrungen 16 liegen auf einem Kreis K1 > K2. Die Außenkontur weist einen maximalen Durchmesser H auf, der größer als der Durchmesser von Kreis K2 ist.

In jede Befestigungsbohrung 16 ist eine Buchse 8 eigesetzt, welche an ihren beiden Endabschnitten von jeweils einem Ring 10 umgeben ist. Dabei weisen die Ringe 10 eine Außenkontur 26 mit zwei im Wesentlichen geradlinigen Abschnitten auf, deren Tangenten T senkrecht auf den Verbindungslinien V der Mittelpunkte M von zwei unmittelbar benachbarten Befestigungsbohrungen 16 stehen.

Der Lamellenpaketkranz 4 ist in Bezug auf die Verbindungslinie V, die die Mittelpunkte M der Befestigungsbohrungen 16 verbindet, symmetrisch gestaltet. Außerdem folgt die Außenkontur des Lamellenpaketkranzes 4 im Bereich der Befestigungsbohrungen 16 dem Kupplungsaußendurchmesser H1, d.h. dass die "Ecken" des Lamellenpaketkranzes 4 radial weiter nach außen gezogen sind als bei herkömmlichen Lamellenpaketkränzen. Im Bereich der Befestigungsbohrungen 16 führt das "Wegnehmen" vom Material am Innendurchmesser K2 und das "Hinzufügen" von Material am Außendurchmesser H1 zu der gewünschten Symmetrie. Auf diese Weise bleibt die Symmetrie bei 6-Ecklamellen auch im Bereich der Befestigungsbohrungen 16 bestehen.

Fig. 7 zeigt Schnitt VII-VII von Fig. 6. Eine Befestigungsbohrung 16 im Lamellenpaketkranz 4 weist eine von der Kreisform abweichende Kontur 18 auf. In die Befestigungsbohrung 16 ist formschlüssig eine Buchse 8 mit einer zu der Kontur 18 der Befestigungsbohrung 16 korrespondierenden Außenkontur 20 eingesetzt. Die runde Innenkontur 22 der Buchse 8 erlaubt es, einen nicht gezeigten Schraubbolzen in die Buchse 8 zu schieben.

Die Buchse 8 trägt zwei jeweils an einer der beiden Stirnflächen 41, 42 des Lamellenpaketkranzes 4 anliegende Ringe 10, 10', die dem Lamellenpaketkranz 4 im Falle einer Biegebeaufschlagung als Biegekanten dienen und deren Innenkontur 24 zu der Außenkontur 20 der Buchse 8 korrespondiert. Die Ringe 10, 10' liegen also formschlüssig an der Außenkontur 20 der Buchse 8 an. Dabei weisen die Ringe 10, wie bereits oben zu Fig. 6 erläutert, eine Außenkontur 26 mit zwei im Wesentlichen geradlinigen Abschnitten auf, deren Tangenten T senkrecht auf den Verbindungslinien V der Mittelpunkte M von zwei unmittelbar benachbarten Befestigungsbohrungen 16 stehen.

Die Ringe 10, 10' werden soweit über die beiden Enden der Buchse 8 geschoben, dass sie an den Stirnflächen 41, 42 des Lamellenpaketkranzes 4 anliegen. Die Enden der Buchse 8 werden jeweils mit dem anliegenden Ring 10, 10' verbördelt. Dabei wird die Buchse 8 an ihrem Ende nach außen verformt. Der Freiraum 28 im Bereich der Fase 27 des Ringes 10, 10' ermöglicht diese Verformung. Durch die Verformung wird der Ring 10, 10' axial gegen die Decklamelle an den Stirnflächen 41, 42 des Lamellenpaketkranzes 4 gedrückt.

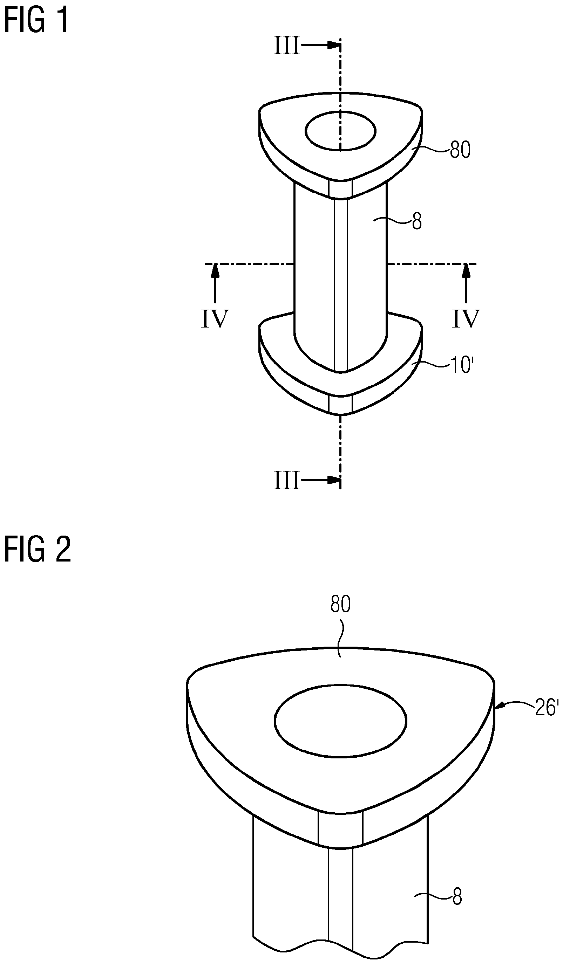

Fig. 1 zeigt eine Schrägansicht einer Bundbuchse 8, 80 mit einem Ring 10'. Eine Bundbuchse 8, 80 ist eine Buchse 8, die an einem Ende einen Bund 80 aufweist. Der Ring 10' wird auf das dem Bund 80 gegenüber liegende Ende der Buchse 8 geschoben. Die Buchse 8 weist eine von der Kreisform abweichende Außenkontur auf.

Fig. 2 zeigt eine vergrößerte Ansicht des Bunds 80 aus Fig. 1. Der Bund 80 weist eine von der Kreisform abweichende Außenkontur 26' auf.

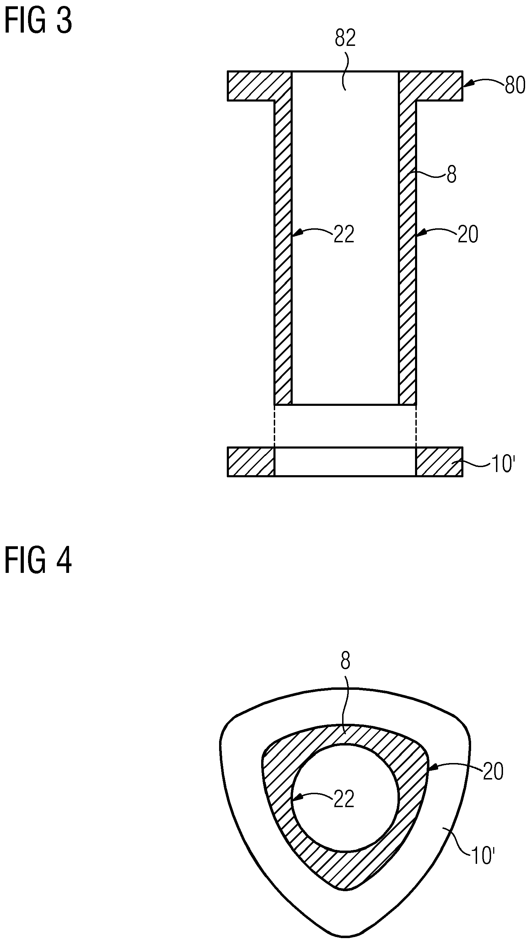

Fig. 3 zeigt Schnitt III-III aus Fig. 1, wobei der Ring 10' von der Bundbuchse 8, 80 abgenommen ist. Fig. 4 zeigt Schnitt IV-IV aus Fig. 1, d.h. einen Schnitt durch die Buchse 8 quer zur Längsachse der Buchse 8. Die Buchse 8 weist eine von der Kreisform abweichende Außenkontur 20 und eine beliebige Innenkontur 22 auf. Unter Kontur wird die Form des Umfangs verstanden. Die Innenkontur 22 ist lediglich insofern limitiert, dass sie ein Schraubelement, z.B. einen Schraubbolzen, aufnehmen können muss.

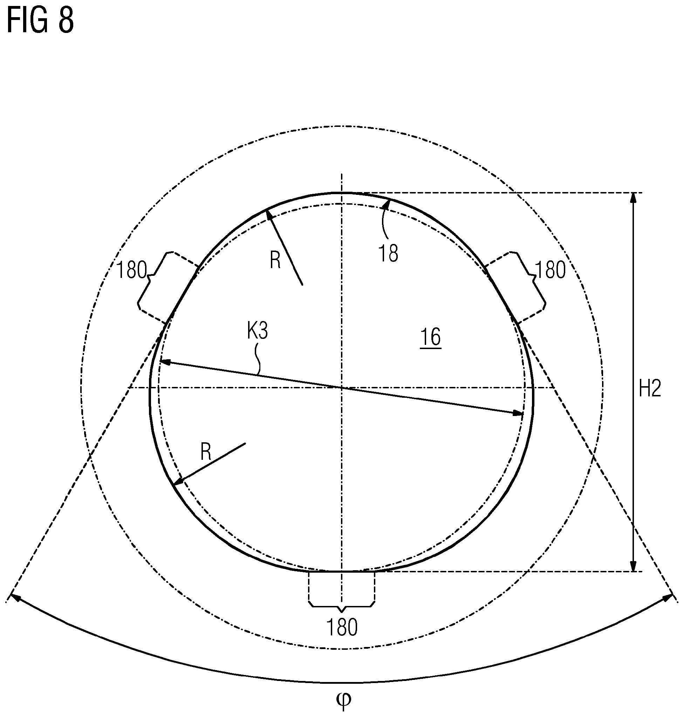

Fig. 8 zeigt eine Kontur einer Befestigungsbohrung 16 in Form eines abgerundeten Dreiecks. In die Kontur 18 kann ein Kreis K3 gelegt werden. Die maximale radiale Abmessung H2 der Befestigungsbohrung 16 ist größer als der Kreis K3. Im Bereich der Winkel 0, 120 und 240 Grad ist die Kontur 18 radial größer als der Kreis K3. Dazwischen, d.h. im Bereich der Winkel 60, 180 und 300 Grad, liegt die Kontur 18 am Kreis K3 an; in diesen drei Bereichen weist die Kontur 18 im Wesentlichen geradlinige Abschnitte 180 auf. Die Tangenten an zwei benachbarte geradlinige Abschnitte 180 schließen einen Winkel ϕ ein, wobei im Falle der vorliegenden Befestigungsbohrung 16 in Form eines abgerundeten Dreiecks ϕ bei 60 Grad liegt.

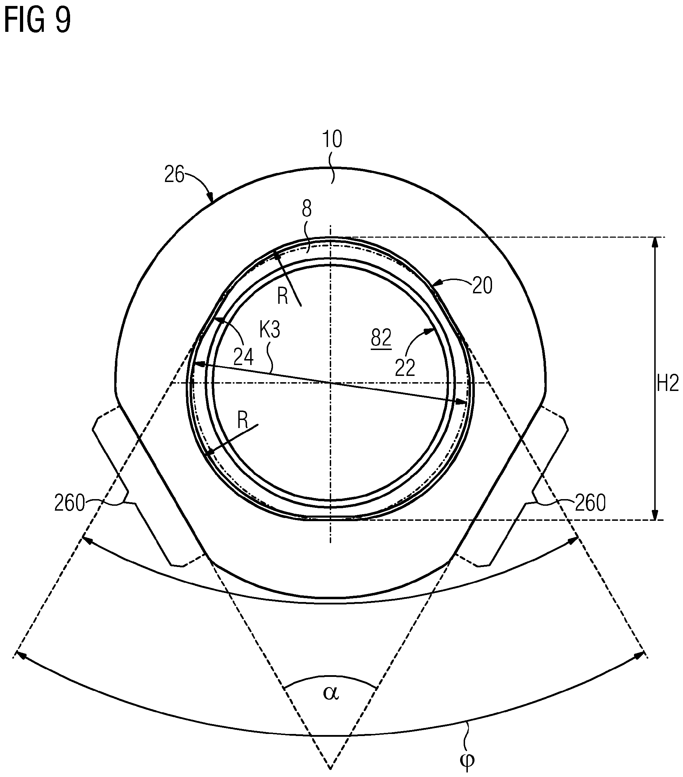

Fig. 9 zeigt die Konturen einer Buchse 8 und eines Rings 10 für die Befestigungsbohrung 16 in Fig. 8. Die Außenkontur 20 der Buchse 8 korrespondiert zu der Kontur 18 der Befestigungsbohrung 16, so dass die Buchse 8 formschlüssig und verdrehsicher in der Befestigungsbohrung 16 sitzt. Die Axialbohrung 82 der Buchse 8 wird von der Innenkontur 22 der Buchse begrenzt. Um das Ende der Buchse 8 ist ein Ring 10 gelegt, dessen Innenkontur 24 zu der Außenkontur 20 der Buchse 8 korrespondiert. Die Außenkontur 26 des Rings 10 weist zwei um den Winkel α von 60 Grad versetzte Bereiche mit im Wesentlichen geradlinigen Abschnitten 260 auf: In diesen Bereichen dient der Ring 10 dem Lamellenpaketkranz im Falle einer Biegebeaufschlagung als Biegekante.

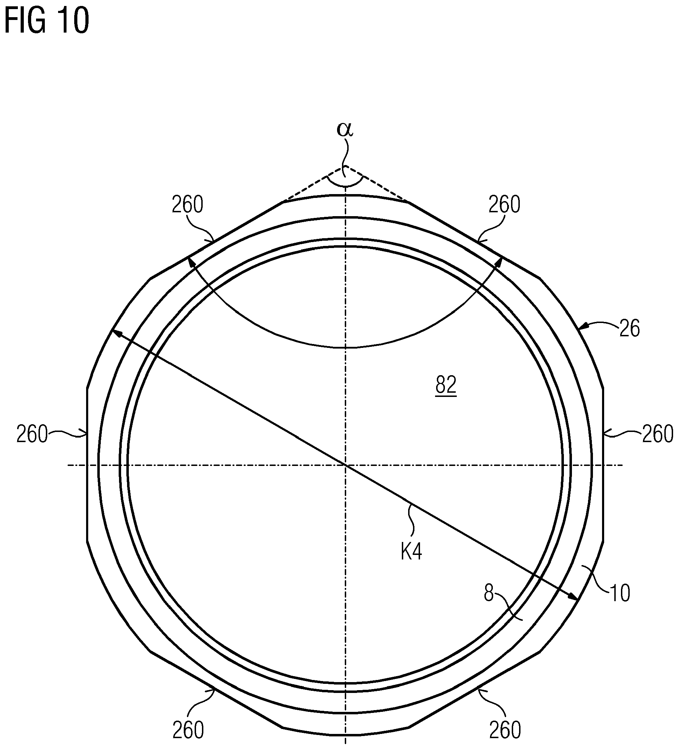

Fig. 10 zeigt alternative Konturen einer Buchse 8 und eines Rings 10 für die Befestigungsbohrung 16 in Fig. 8. Die Außenkontur 26 des Rings 10 folgt einem Kreis K4. Dabei weist der Ring 10 sechs Bereiche mit im Wesentlichen geradlinigen Abschnitten 260 auf. Die Tangenten an zwei benachbarte geradlinige Abschnitte 260 schließen einen Winkel α von 120 Grad ein.

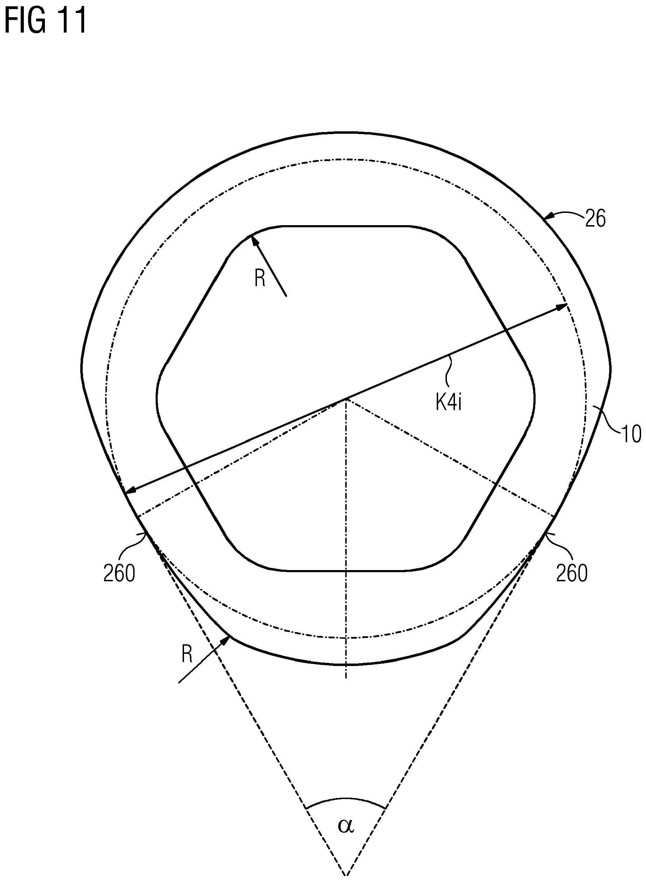

Fig. 11 zeigt Konturen eines Rings 10 für eine Befestigungsbohrung in Form eines abgerundeten Sechsecks. Die Außenkontur 26 des Rings 10 folgt einem Kreis K4i. Dabei weist der Ring 10 zwei Bereiche mit im Wesentlichen geradlinigen Abschnitten 260 auf. Die Tangenten an die zwei benachbarten geradlinigen Abschnitte 260 schließen einen Winkel α von 60 Grad ein.

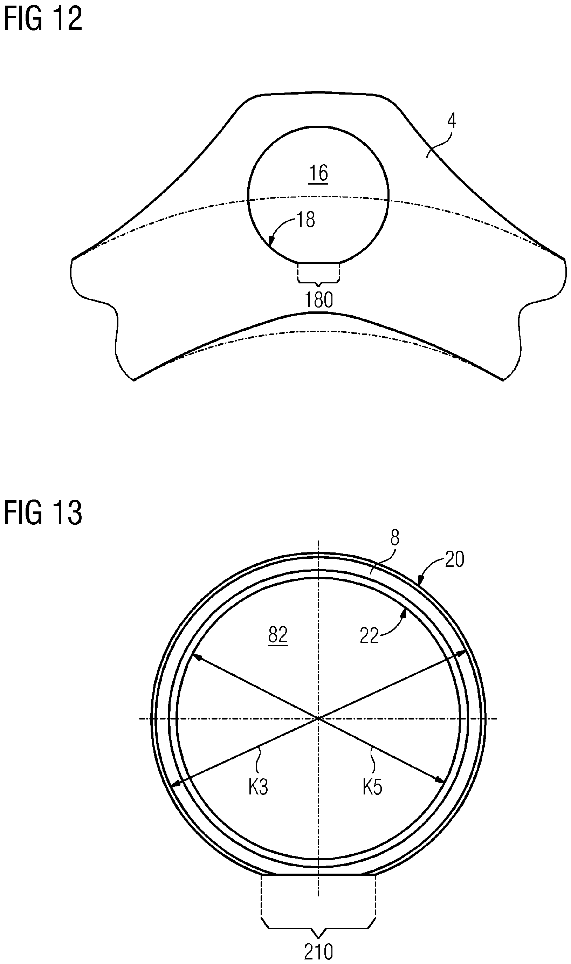

Fig. 12 zeigt eine Kontur einer Befestigungsbohrung 16 mit einer kreisförmigen Kontur, welche an einer Stelle durch eine Kreissehne 180, d.h. einer geraden Kante, unterbrochen wird.

Fig. 13 zeigt die Kontur einer Buchse 8 für die Befestigungsbohrung 16 in Fig. 12. Die Innenkontur 22 der Buchse 8 entspricht einem Kreis K5. Entsprechend der Kontur 18 der Befestigungsbohrung 16 weist die ansonsten runde Außenkontur 20 der Buchse 8, einem Kreis K3 folgend, an einer Stelle des Umfangs eine gerade Kante 210 auf. Beim Einsetzen der Buchse 8 in die Befestigungsbohrung 16 kommt die gerade Kante 210 der Buchse 8 an der Kreissehne 180 der Befestigungsbohrung 16 zu liegen.

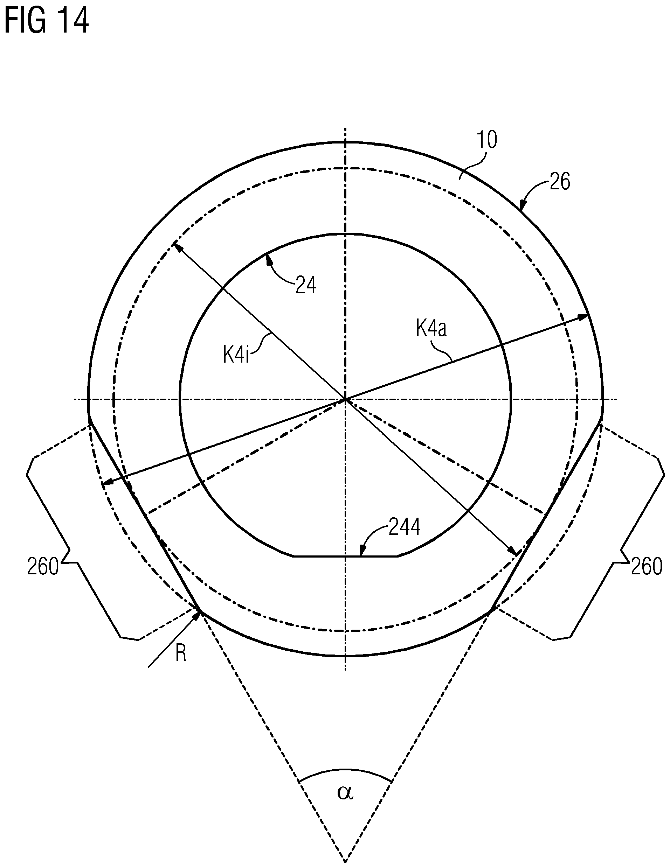

Fig. 14 zeigt die Kontur eines Rings 10 für die Buchse 8 in Fig. 13. Entsprechend der Außenkontur 20 der Buchse 8 weist die ansonsten runde Innenkontur 24 des Rings 10 an einer Stelle des Umfangs eine gerade Kante 244 auf. Beim Aufsetzen des Rings 10 auf die Buchse 8 kommt die gerade Kante 244 des Rings 10 an der gerade Kante 210 der Buchse 8 zu liegen. Die Außenkontur 26 des Rings 10 folgt einem Kreis K4a. Dabei weist der Ring 10 zwei Bereiche mit im Wesentlichen geradlinigen Abschnitten 260 auf. Die Tangenten an die zwei benachbarten geradlinigen Abschnitte 260 schließen einen Winkel α von 60 Grad ein. Dabei bilden die beiden geradlinigen Abschnitte 260 Tangenten an einen Kreis K4i, der kleiner ist als der Kreis K4a.

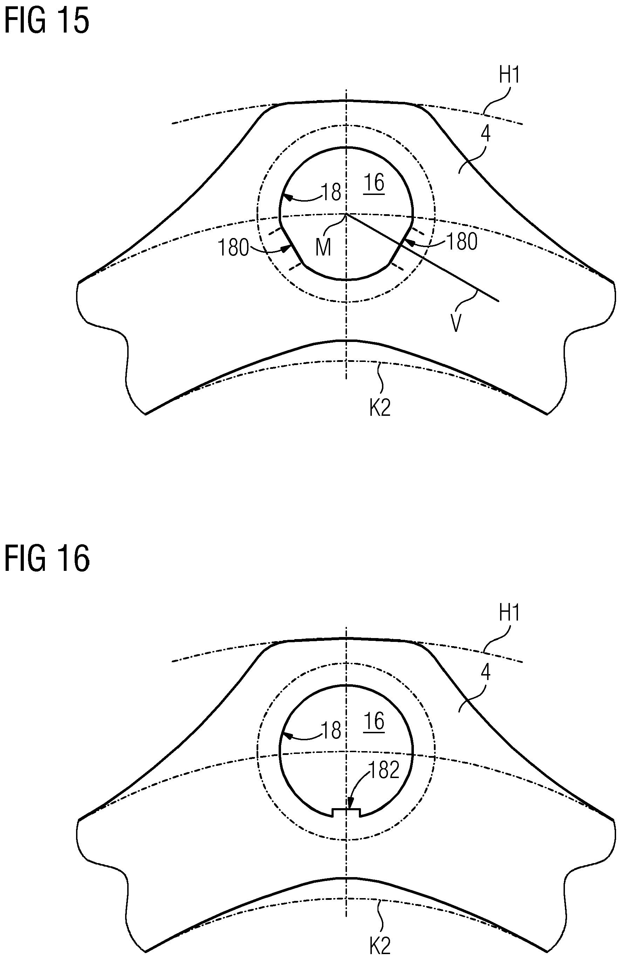

Fig. 15 zeigt eine Kontur einer Befestigungsbohrung 16 in Form eines Kreises mit zwei geraden Kanten 180, die senkrecht auf den Verbindungslinien V zu den Mittelpunkten M der beiden unmittelbar benachbarten Befestigungsbohrungen 16 stehen. Der Lamellenpaketkranz 4, in den die Befestigungsbohrung 16 eingebracht ist, hat einen Außenumfang, der abschnittsweise einen Kreis H1 berührt, und einen Innenumfang, der abschnittsweise einen Kreis K2 berührt.

Fig. 16 zeigt, in einem Lamellenpaketkranz 4 mit einem abschnittsweise einen Kreis H1 berührenden Außenumfang, eine Kontur 18 einer Befestigungsbohrung 16 in Form eines Kreises mit einer radial zum Mittelpunkt der Befestigungsbohrung 16 vorstehenden Nase 182.

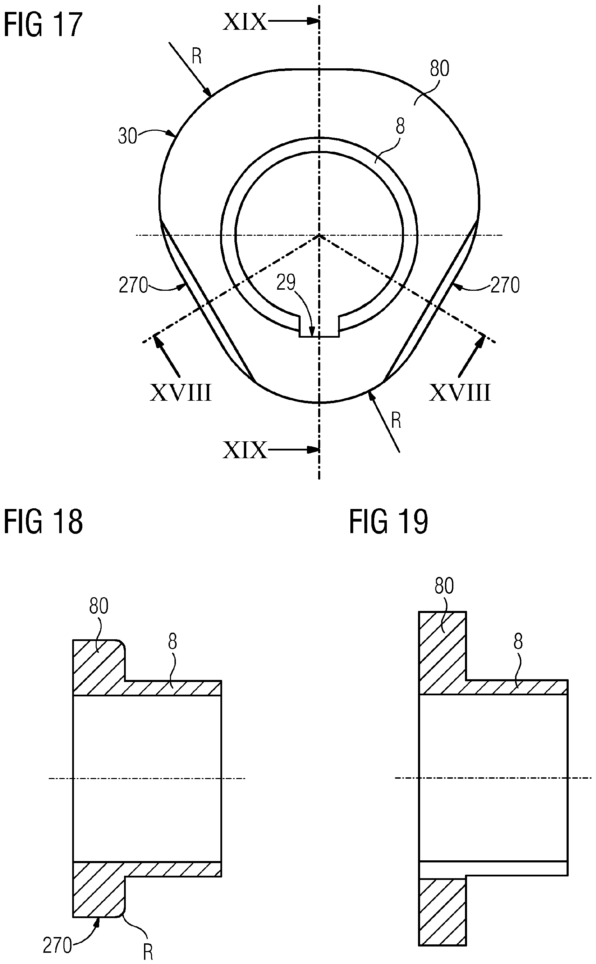

Fig. 17 zeigt eine Kontur einer Bundbuchse 8, 80 für die Befestigungsbohrung in Fig. 16. Die Buchse 8 ist in axialer Richtung geschlitzt, so dass die Buchse 8 in die Befestigungsbohrung 16 eingeschoben werden kann: der Schlitz kommt an der vorstehenden Nase 182 der Befestigungsbohrung 16 zu liegen. Die Innenkontur 29 des Bundes 80 folgt der runden Außenkontur der Buchse 8, weist aber ebenfalls eine Schlitzung auf. Die Außenkontur 30 des Bunds 80 weist zwei Bereiche mit im Wesentlichen geradlinigen Abschnitten 270 auf.

Fig. 18 zeigt den Schnitt XVIII-XVIII aus Fig. 17. In den zwei Bereichen der Außenkontur 30 des Bunds 80 mit den im Wesentlichen geradlinigen Abschnitten 270 weist die an den Lamellenpaketkranz 4 zur Anlage kommende Kante einen Krümmungsradius R auf; somit wird die Kerbwirkung der dem Lamellenpaketkranz 4 im Falle einer Biegebeaufschlagung als Biegekanten dienenden Kanten der geradlinigen Abschnitte 270 gemindert.

Fig. 19 zeigt den Schnitt XIX-XIX aus Fig. 17, in dem die eine Verdrehsicherung bewirkenden Schlitzungen in Buchse 8 und Bund 80 zu erkennen sind.

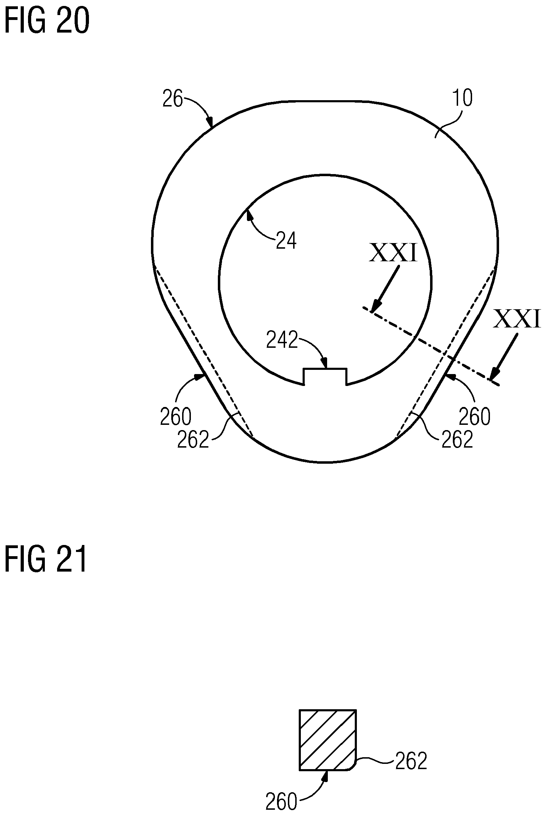

Fig. 20 zeigt eine Kontur eines Rings 10 für die Bundbuchse 8, 80 in Fig. 17. Der Ring 10 wird auf das dem Bund gegenüber liegende Ende der Buchse 8 geschoben. Die Innenkontur 24 des Rings 10 hat die Form eines Kreises mit einer radial zum Mittelpunkt des Rings 10 vorstehenden Nase 242, welche in der Schlitzung der Buchse 8 eingeführt wird. Die Außenkontur 26 weist zwei Bereiche mit im Wesentlichen geradlinigen Abschnitten 260 auf. In den zwei Bereichen der Außenkontur 26 des Rings 10 mit den im Wesentlichen geradlinigen Abschnitten 260 weist die an den Lamellenpaketkranz 4 zur Anlage kommende Kante 262 einen Krümmungsradius R auf; somit wird die Kerbwirkung der dem Lamellenpaketkranz 4 im Falle einer Biegebeaufschlagung als Biegekanten dienenden Kanten 262 der geradlinigen Abschnitte 260 gemindert.

Fig. 21 zeigt den Schnitt XXI-XXI aus Fig. 20, in dem die Kante 262 mit dem Krümmungsradius zu erkennen ist.

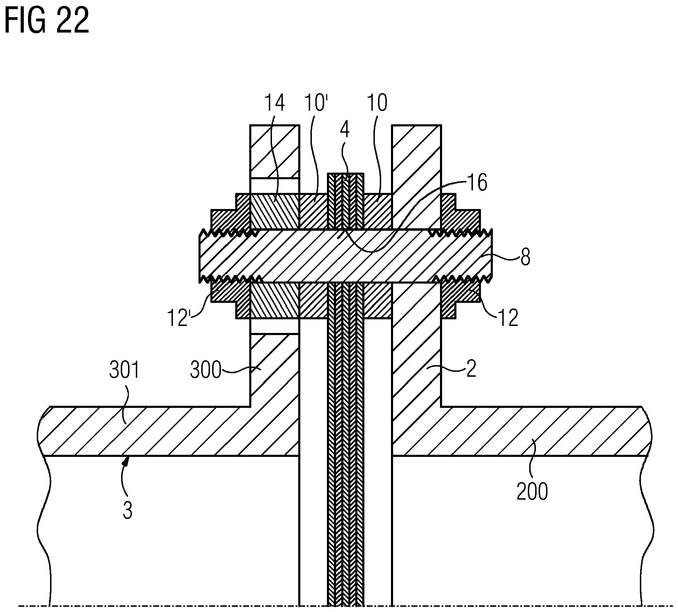

Fig. 22 zeigt ein Detail eines Längsschnitts durch eine weitere Lamellenkupplung. Das in Fig. 22 gezeigte Detail ist ähnlich zu der in Fig. 5 rechts dargestellten Flanschverbindung, benutzt aber im Gegensatz zu der in Fig. 5 gezeigten Lamellenkupplung keine Schraubbolzen in Kombination mit einem Formschlusselement in Form einer Buchse, sondern Stiftschrauben, welche ohne separate Buchse verwendet werden, da die Stiftschrauben selbst als Formschlusselement fungieren.

Gegenüber einem ersten Anschlussflansch 2 der Lamellenkupplung, der über eine hülsenförmige Nabe 200 an einer Welle (nicht gezeigt) montiert werden kann, ist ein ringförmiger Flansch 300 eines Zwischenstücks 3 der Lamellenkupplung positioniert. Zwischen den beiden sich gegenüber liegenden ringförmigen Flanschen 2, 300 ist ein Lamellenpaketkranz 4 angeordnet, welcher aus einer Vielzahl von Stahllamellen gebildet ist, welche schichtweise aufeinander zu einem Paket angeordnet sind. Der Lamellenpaketkranz 4 weist umlaufend und äquidistant über seinen Umfang verteilt mehrere durchgehende Befestigungsbohrungen 16 auf. Der mit Abstand zwischen den Flanschen 2, 300 angeordnete Lamellenpaketkranz 4 ist mittels Formschlusselementen in Form von Stiftschrauben 8 wechselweise an dem einen und anderen Flansch 2, 300 angeschlossen.

Dabei sind Stiftschrauben 8 in die in dem Lamellenpaketkranz 4 angeordneten Befestigungsbohrungen 16 eingesetzt, wobei die Außenkontur der Stiftschrauben 8 der Kontur der Befestigungsbohrungen 16 entspricht. An den beiden Stirnseiten des Lamellenpaketkranzes 4 wird jeweils ein Ring 10, 10' von der Stiftschraube 8 getragen. An den, am Anschlussflansch 2 gelegenen, ersten Gewindeende der Stiftschraube 6 presst eine erste Schraubmutter 12 den Anschlussflansch 2 gegen den zur Schraubmutter 12 hin gelegenen Ring 10. An den am Flansch 300 des Zwischenstücks 3 gelegenen zweiten Gewindeende der Stiftschraube 6 presst eine zweite Schraubmutter 12' einen Abstandsring 14 gegen den zur zweiten Schraubmutter 12' hin gelegenen Ring 10'.Durch Anziehen der beiden Schraubmuttern 12, 12' ist der Lamellenpaketkranz 4 fest zwischen den beiden Ringen 10, 10' eingespannt und mit dem nabenseitigen Flansch 2 verbunden.

An einer unmittelbar benachbarten Befestigungsbohrung des Lamellenpaketkranzes 4 ist der Lamellenpaketkranz 4 mit dem Flansch 300 des Zwischenstücks 3 verbunden, und so immer abwechselnd mit dem einen und dem anderen Flansch 2, 300.

## Patentansprüche

1. Lamellenkupplung mit zwei Anschlussflanschen (1, 2) und einem zwischen den Anschlussflanschen (1, 2) angeordneten Zwischenstück (3), wobei zwischen jedem der Anschlussflansche (1, 2) und dem Zwischenstück (3) jeweils ein Lamellenpaketkranz (4) angeordnet ist, welcher mittels Schraubelementen (6), die durch in dem Lamellenpaketkranz (4) angeordnete durchgehende Befestigungsbohrungen (16) geführt sind, wechselweise mit dem jeweiligen Anschlussflansch (1, 2) und dem Zwischenstück (3) verbunden ist,
**dadurch gekennzeichnet,**
**dass** mindestens eine der Befestigungsbohrungen (16) des Lamellenpaketkranzes (4) eine von der Kreisform abweichende Kontur (18) aufweist, wobei in die Befestigungsbohrung (16) ein Formschlusselement (8) mit einer korrespondierenden Außenkontur (20) eingesetzt ist, und
wobei mindestens ein dem Lamellenpaketkranz (4) als Biegekante dienendes Bauteil (10, 10', 80) formschlüssig an der Außenkontur (20) des Formschlusselements (8) anliegt.

2. Lamellenkupplung nach Anspruch 1,
wobei das Formschlusselement (8) in Form einer Buchse (8) zwei jeweils an einer der beiden Stirnflächen des Lamellenpaketkranzes (4) anliegende Ringe (10, 10') trägt, die dem Lamellenpaketkranz (4) als Biegekanten dienen und deren Innenkontur (24) zu der Außenkontur (20) der Buchse (8) korrespondiert.

3. Lamellenkupplung nach Anspruch 1,
wobei das Formschlusselement (8) in Form einer Buchse (8) in einem axialen Endbereich einen Bund (80) aufweist, der an einer Stirnfläche des Lamellenpaketkranzes (4) anliegt, und in dem anderen Endbereich einen an der anderen Stirnfläche des Lamellenpaketkranzes (4) anliegenden Ring (10') trägt, dessen Innenkontur (24) zu der Außenkontur (20) der Buchse (8) korrespondiert, wobei der Bund (80) und der Ring (10') dem Lamellenpaketkranz (4) als Biegekanten dienen.

4. Lamellenkupplung nach einem der vorhergehenden Ansprüche,
wobei das Formschlusselement (8) in Form einer Buchse (8) eine runde Innenkontur (22) aufweist.

5. Lamellenkupplung nach Anspruch 1,
wobei das Formschlusselement (8) in Form einer Stiftschraube zwei jeweils an einer der beiden Stirnflächen des Lamellenpaketkranzes (4) anliegende Ringe (10, 10') trägt, die dem Lamellenpaketkranz (4) als Biegekanten dienen und deren Innenkontur (24) zu der Außenkontur (20) der Stiftschraube (8) korrespondiert.

6. Lamellenkupplung nach einem der Ansprüche 2, 3 oder 5,
wobei die zwei Ringe (10, 10') bzw. der Bund (80) und der Ring (10') eine Außenkontur (26, 26') mit zwei im Wesentlichen geradlinigen Abschnitten aufweist, deren Tangenten (T) senkrecht auf den Verbindungslinien (V) zu den Mittelpunkten der beiden unmittelbar benachbarten Befestigungsbohrungen (16) stehen.

## Claims

1. Multi-plate coupling having two connecting flanges (1, 2) and an intermediate member (3) arranged between the connecting flanges (1, 2), wherein a plate pack crown (4) is arranged in each case between each of the connecting flanges (1, 2) and the intermediate member (3), which plate pack crown (4) is connected alternately to the respective connecting flange (1, 2) and the intermediate member (3) by means of bolted elements (6) which are guided through continuous fastening bores (16) arranged in the plate pack crown (4),
**characterised in that**
at least one of the fastening bores (16) of the plate pack crown (4) has a contour (18) diverging from the circular shape, wherein a positive-locking element (8) having a corresponding outer contour (20) is inserted into the fastening bore (16), and
wherein at least one component (10, 10', 80) serving the plate pack crown (4) as a bending edge bears on the outer contour (20) of the positive-locking element (8) in a positive-locking manner.

2. Multi-plate coupling according to claim 1,
wherein the positive-locking element (8) in the form of a bush (8) carries two rings (10, 10') each bearing against one of the two end faces of the plate pack crown (4) and serving the plate pack crown (4) as bending edges and the inner contour (24) of which corresponds to the outer contour (20) of the bush (8).

3. Multi-plate coupling according to claim 1,
wherein the positive-locking element (8) in the form of a bush (8) has, in one axial end section, a collar (80) which bears against an end face of the plate pack crown (4), and in the other end section carries a ring (10') bearing against the other end face of the plate pack crown (4) and the inner contour (24) of which corresponds to the outer contour (20) of the bush (8), wherein the collar (80) and the ring (10') serve the plate pack crown (4) as bending edges.

4. Multi-plate coupling according to one of the preceding claims,
wherein the positive-locking element (8) in the form of a bush (8) has a circular inner contour (22).

5. Multi-plate coupling according to claim 1,
wherein the positive-locking element (8) in the form of a stud bolt carries two rings (10, 10') each bearing against one of the two end faces of the plate pack crown (4) and serving the plate pack crown (4) as bending edges and the inner contour (24) of which corresponds to the outer contour (20) of the stud bolt (8).

6. Multi-plate coupling according to one of claims 2, 3 or 5,
wherein the two rings (10, 10') or, as the case may be, the collar (80) and the ring (10') have an outer contour (26, 26') having two substantially rectilinear segments, the tangents (T) of which stand vertically on the connecting lines (V) to the centre points of the two immediately adjacent fastening bores (16).

## Revendications

1. Embrayage à disque ayant deux brides (1, 2) de raccord et une pièce (3) intermédiaire, disposée entre les brides (1, 2) de raccord, dans lequel, entre chacune des brides (1, 2) de raccord et la pièce (3) intermédiaire, est disposée, respectivement, une couronne (4) de paquet de disques, qui, au moyen d'éléments (6) de vissage passant dans des trous (16) de fixation traversants disposés dans la couronne (4) de paquet de disques, est reliée en alternance à la bride (1, 2) de raccord respective et à la pièce (3) intermédiaire,
**caractérisé en ce que**
au moins l'un des trous (16) de fixation de la couronne (4) de paquet de disques a un contour (18) s'écartant de la forme circulaire, dans lequel, dans le trou (16) de fixation, est inséré un élément (8) de complémentarité de forme, ayant un contour (20) extérieur correspondant, et dans lequel au moins une pièce (10, 10', 80) servant à la couronne (4) de paquet de disques de bord cintré s'applique à complémentarité de forme au contour (20) extérieur de l'élément (8) de complémentarité de forme.

2. Embrayage à disque suivant la revendication 1,
dans lequel l'élément (8) de complémentarité de forme, sous la forme d'une boîte (8), porte deux anneaux (10, 10'), qui s'appliquent chacun sur l'une des deux surfaces frontales de la couronne (4) du paquet de disques, qui servent de bords cintrés à la couronne (4) de paquet de disques et dont le contour (24) intérieur correspond au contour (20) extérieur de la boîte (8).

3. Embrayage à disque suivant la revendication 1,
dans lequel l'élément (8) de complémentarité de forme sous la forme d'une boîte (8) a, dans une partie d'extrémité axiale, une collerette (80), qui s'applique à une surface frontale de la couronne (4) du paquet de disques et porte, à l'autre partie d'extrémité, un anneau (10'), qui s'applique à l'autre surface frontale de la couronne (4) du paquet de disques et dont le contour (24) intérieur correspond au contour (20) extérieur de la boîte (8), la collerette (80) et l'anneau (10') servant de bords cintrés à la couronne (4) de paquet de disques.

4. Embrayage à disque suivant l'une des revendications précédentes,
dans lequel l'élément (8) de complémentarité de forme sous la forme d'une boîte (8) a un contour (22) intérieur circulaire.

5. Embrayage à disque suivant la revendication 1,
dans lequel l'élément (8) de complémentarité de forme sous la forme d'un goujon fileté porte deux anneaux (10, 10'), qui s'appliquent chacun à l'une des deux faces frontales de la couronne (4) du paquet de disques, qui servent de bords cintrés à la couronne (4) de paquet de disques et dont le contour (24) intérieur correspond au contour (20) extérieur du goujon (8) fileté.

6. Embrayage à disque suivant l'une des revendications 2, 3 ou 5,
dans lequel les deux anneaux (10, 10') ou la collerette (80) et l'anneau (10') ont un contour (26, 26') extérieur ayant deux partie sensiblement rectilignes, dont les tangentes (T) sont perpendiculaires aux lignes (V) de liaison passant par les centres des deux trous (16) de fixation immédiatement voisins.
